# EUROPÄISCHE PATENTANMELDUNG

(11) **EP 1 350 652 A2**
(43) Veröffentlichungstag der Anmeldung: **08.10.2003**
(21) Anmeldenummer: 03005757.4
(22) Anmeldetag: 14.03.2003
(51) Int. Cl.: B60K 7/00, B60K 1/04, B60L 7/00, B62B 5/00

(54) **Golfwagen**

(30) Priorität: 04.04.2002 DE 10214878
(71) Anmelder: Alber Antriebstechnik GmbH, 72458 Albstadt (DE)
(72) Erfinder: Alber, Ulrich, 72459 Albstadt (DE)
(74) Vertreter: Möbus, Daniela, Dr.-Ing.

(57) **Zusammenfassung**

Ein Golfwagen mit einem Gestell für eine Golftasche, das mit mindestens zwei Laufrädern (10) versehen ist, sowie mit einem elektromotorischen Antrieb für die Laufräder (10), dadurch gekennzeichnet, dass bei jedem angetriebenen Laufrad (10) der das Rad antreibende Elektromotor (13) sowie mindestens eine Batterie (16) im Laufrad (10) angeordnet sind (Fig. 1)

## Beschreibung

Die Erfindung betrifft einen Golfwagen mit einem Gestell zur Aufnahme einer Golftasche, das mit mindestens zwei Laufrädern versehen ist, sowie mit einem elektromotorischen Antrieb für die Laufräder.

Solche als Elektro-Caddys bezeichneten Golfwagen gibt es bereits in den unterschiedlichsten Ausführungen. Dabei haben jedoch fast alle Caddys den Nachteil, dass sie schwer und sperrig sind. Sie lassen sich daher nur sehr schlecht im Kofferraum eines PKW transportieren. Zwar weisen einige Caddys bereits in die Laufräder integrierte Motoren auf, doch sind die Laufräder stets durch eine starre Achse miteinander verbunden, wodurch sich das Packmaß auch bei einem klappbaren Gestell des Caddys nur in eingeschränktem Umfang reduzieren lässt. Bei allen bekannten Caddys ist zudem die Batterie irgendwo am Gestell oder gar in der Golftasche selbst untergebracht.

Der vorliegenden Erfindung liegt die Aufgabe zugrunde, einen klappbaren und leichten elektromotorisch angetriebenen Golfwagen zu schaffen.

Die Aufgabe wird mit einem Golfwagen der eingangs genannten Art erfindungsgemäß dadurch gelöst, dass bei jedem angetriebenen Laufrad der das Rad antreibende Elektromotor sowie mindestens eine Batterie im Laufrad selbst angeordnet sind.

Durch die Anordnung sowohl von Elektromotor als auch Batterie im Laufrad nimmt die Batterie am Gestell oder in der Golftasche keinen Platz weg. Darüber hinaus hat diese Lösung den Vorteil, dass die Laufräder mittels Steckachsen abnehmbar am Gestell befestigbar sein können, sodass hier auf eine starre Achse zwischen den Laufrädern verzichtet werden kann.

Der Elektromotor und die mindestens eine Batterie können ohne Überstand im Laufrad untergebracht sein, wobei die Laufräder Standardmaße aufweisen können. Motoren und Batterie nehmen somit keinerlei Platz am Wagen oder in einer Golftasche weg. Der Elektromotor kann ein Nabenmotor sein, vorzugsweise jedoch ein außermittig angeordneter Motor, der über ein Ritzel auf einen Innenzahnkranz des Laufrades einwirkt. Bei dieser Lösung ist die Kraftübertragung zwischen Motor und Rad günstiger als beim Nabenmotor. Es ist außerdem möglich, den Elektromotor als getriebelosen Motor auszugestalten.

Weitere Vorteile ergeben sich, wenn der Elektromotor in eine Leerlaufstellung bringbar ist. Das Caddy verhält sich dann wie ein normales Ziehcaddy.

Die Motoren können bei Talfahrt den Wagen bremsen und Energie in die Batterien zurückspeisen. Gerade bei sehr hügeligen Golfplätzen ist dies für die Handhabung des Golfwagens von großem Vorteil.

Bei einer bevorzugten Ausgestaltung können die Laufräder ohne Werkzeug vom Gestell abnehmbar sein. Dies ist vor allem für den Transport des Golfwagens in einem PKW vorteilhaft, da sich dann der Wagen rasch zerlegen und wieder zusammenmontieren lässt. Die Laufräder können außerdem gegeneinander austauschbar ausgebildet sein, sodass beim Zusammenbau nicht darauf geachtet werden muss, welches Rad auf der linken und welches auf der rechten Seite des Wagens anzuordnen ist. Die Austauschbarkeit hat außerdem bei der Fehlerdiagnose Vorteile.

Der Golfwagen kann mindestens zwei angetriebene Laufräder aufweisen. Dies ist auch bei den bekannten Caddys der Normalfall. Es gibt jedoch auch dreirädrige Golfwagen.

Weitere Vorteile ergeben sich, wenn der elektromotorische Antrieb über einen Sensorhandgriff des Wagens angesteuert ist. Vorzugsweise kann dabei diese Ansteuerung per Funk erfolgen. Die erforderliche Ansteuerelektronik mit Empfangs- und gegebenenfalls mit Sendeantenne kann ebenfalls in das Lenkrad integriert werden. Auf diese Weise lassen sich alle herkömmlichen manuellen und elektrischen Caddys durch einfachen Austausch der Laufräder und des Handgriffs in ein leicht und klein zusammenklappbares Caddy mit motorischem Antrieb umwandeln.

Vorzugsweise kann der Sensorgriff derart ausgestaltet sein, dass er ein Schieben oder Ziehen des Wagens unterscheiden kann. Außerdem können Vorrichtungen zur automatischen Anpassung der Geschwindigkeit des Wagens an die Gehgeschwindigkeit des Benutzers vorgesehen sein.

Für die leichte Verladbarkeit des Golfwagens in den Kofferraum eines PKWs ist es außerdem zweckmäßig, wenn das Gestell zusammenklappbar ist.

Nachfolgend wird eine bevorzugte Ausgestaltung eines Laufrads eines erfindungsgemäßen Golfwagens anhand der Zeichnungen näher beschrieben.

Im Einzelnen zeigen:
- Fig. 1: einen Längsschnitt durch ein Laufrad;
- Fig. 2: einen Querschnitt durch das Laufrad aus Fig. 1 entlang der Linie II-II;
- Fig. 3: eine perspektivische Ansicht auf die Innenseite des Laufrads aus Fig. 1;
- Fig. 4: eine perspektivische Ansicht auf die Außenseite des Laufrads aus Fig. 1;
- Fig. 5: eine Innenansicht einer zweiten Ausführungsform eines Laufrads;
- Fig. 6: einen perspektivischen Querschnitt durch das Laufrad aus Fig. 5.

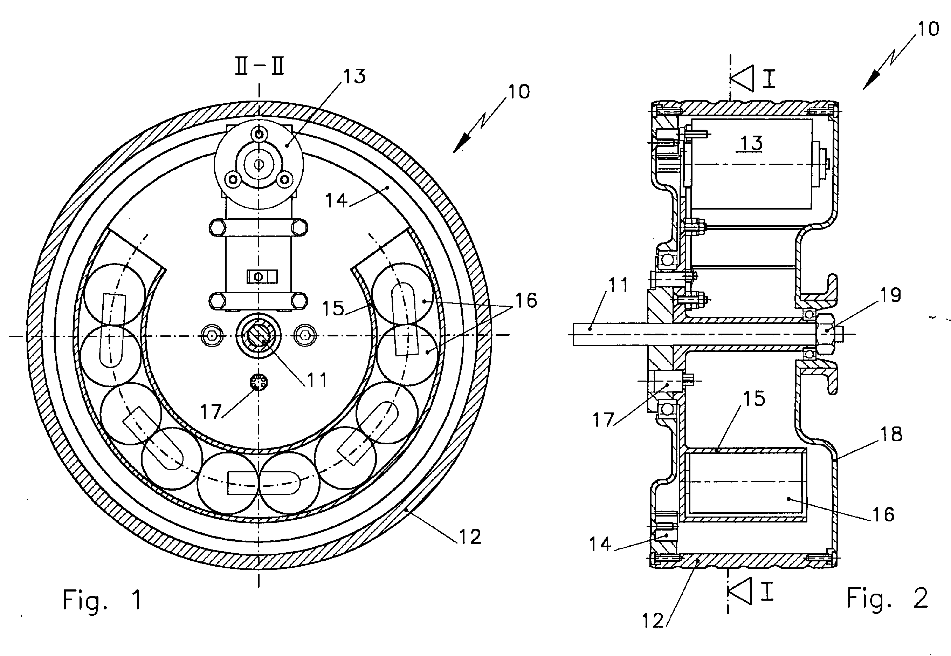

Fig. 1 zeigt ein Laufrad 10 mit einer Steckachse 11 und einer Lauffläche 12. Mittels der Steckachse 11 lässt sich das Laufrad 10 an ein Gestell eines hier nicht näher dargestellten Golfwagens montieren. Im Inneren des Laufrads 10 ist ein Elektromotor 13 angeordnet, der an einem Innenzahnkranz 14 angreift und dadurch das Laufrad 10 antreibt. Außerdem ist im Inneren des Laufrads 10 ein Batteriegehäuse 15 für eine Vielzahl von Akkus 16 vorgesehen. Die Akkus 16 dienen der Spannungsversorgung des Motors 13. Bei Bergabfahrten bremst der Motor 13 und speist wieder Energie zurück in die Akkus 16. Mit 17 ist eine Drehmomentabstützung bezeichnet, die gleichzeitig eine elektrische Steckvorrichtung ist.

Wie aus Fig. 2 zu sehen ist, stehen der Motor 13 und das Batteriegehäuse 15 seitlich nicht über das Laufrad 10 mit der Lauffläche 12 und dem Radgehäuse 18 vor. Auf der Außenseite ist eine Entriegelungsvorrichtung 19 für die Steckachse 11 vorgesehen.

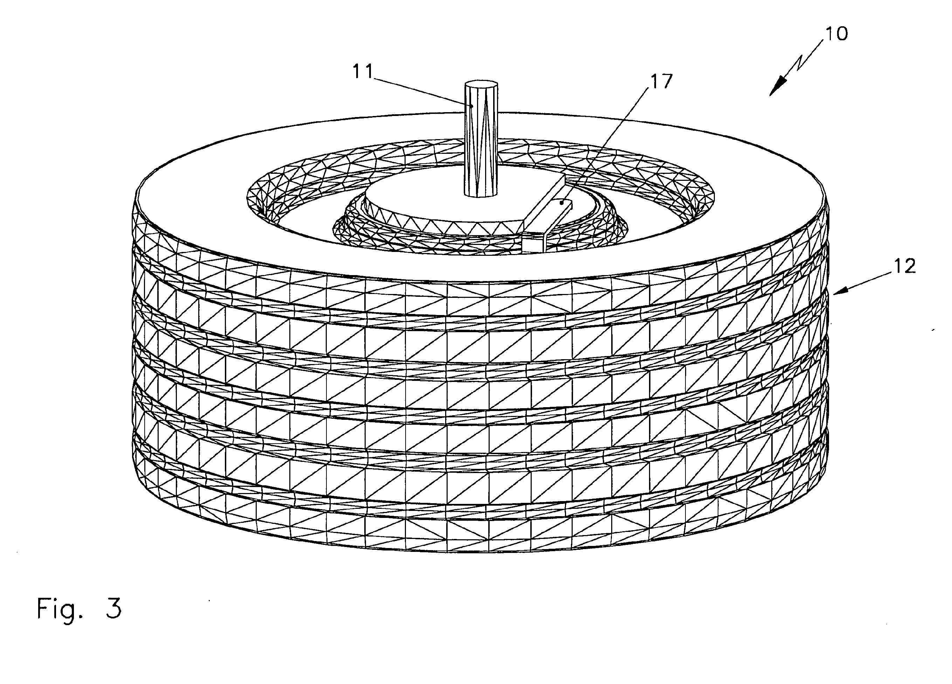

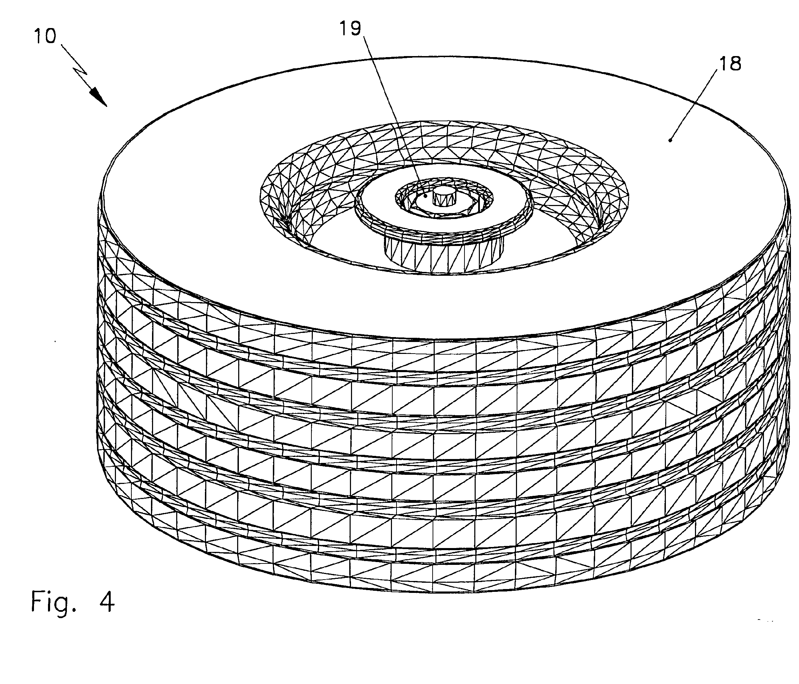

Die Fig. 3 und 4 zeigen das Laufrad 10 in der Außenansicht. In Fig. 3 sind die profilierte Lauffläche 12 sowie die Steckachse 11 und die Drehmomentabstützung 17 zu erkennen. In der Darstellung der Radaußenseite gemäß Fig. 4 sind das Radgehäuse 18 und die Entriegelungsvorrichtung 19 für die Steckachse 11 dargestellt. Die Entriegelungsvorrichtung und die Steckachse 11 sind dabei so ausgeführt, dass die Laufräder 10 ohne Zuhilfenahme eines Werkzeugs am Gestell des Golfwagens zu montieren sind.

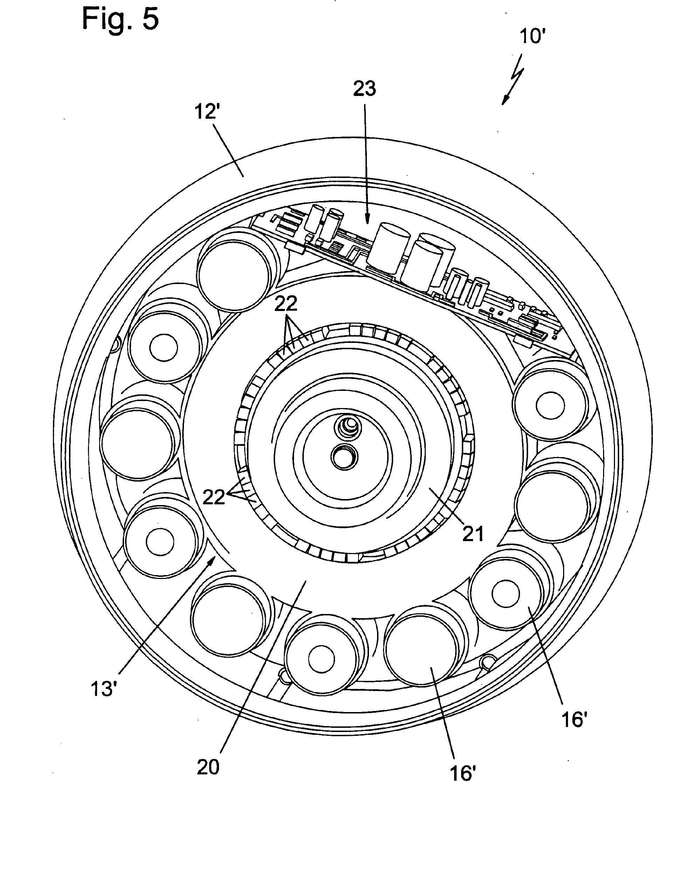

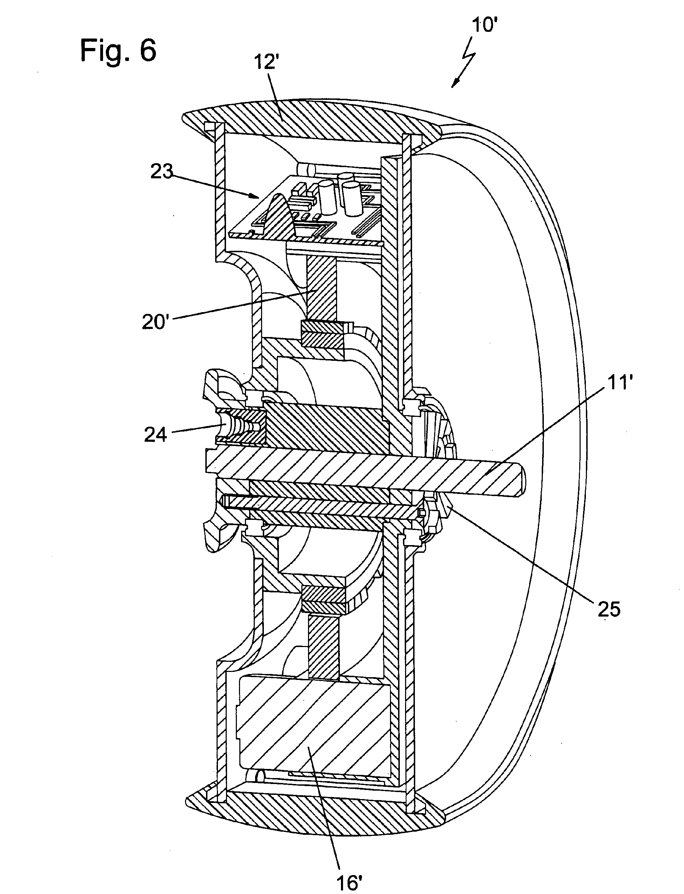

Die Fig. 5 und 6 zeigen eine zweite Ausführungsform eines Laufrads 10' mit einer Lauffläche 12' und einer Steckachse 11'. Der Elektromotor 13' weist einen Stator 20 und einen Rotor 21 auf. Mit 22 sind die Magnete des Elektromotors 13' bezeichnet. Die Statorwirkung ist aus Übersichtlichskeitsgründen weggelassen worden. Der Stator 20 und die Akkus 16' stehen fest, während der Rotor 21 und mit ihm die Lauffläche 12' rotieren. Beim Motor 13' handelt es sich somit um einen getriebelosen Direktantrieb. Im Laufrad 10' ist außerdem eine Ansteuerelektronik 23 integriert. Sie kann eine Empfangsantenne zum Empfang von Funksteuersignalen, die vom Handgriff des Caddys abgegeben werden, aufweisen. Auch eine Sendeeinrichtung zum Signalaustausch mit dem Handgriff kann vorgesehen sein. Die Ansteuerelektronik regelt somit die Antriebsrichtung und die Geschwindigkeit des Laufrads 10'. Sie rotiert ebenso wie die Akkus 16' nicht mit.

Wie insbesondere Fig. 6 zeigt, weist das Laufrad 10' außerdem eine Ladebuchse 24 für die Akkus 16' und eine rosettenartig gestaltete Drehmomentabstützung 25 des Laufrads 10' am hier nicht dargestellten Caddy-Gestell auf.

Durch die Integration des Motors 13', der Akkus 16' und der Elektronik 23 für eine Funkansteuerung des Motors 13' vom Handgriff eines Caddys aus, eignen sich die Laufräder zur Nachrüstung jedes beliebigen handbetätigten oder elektromotorisch getriebenen Caddys. Neben dem Austausch der Laufräder des Caddys muss lediglich auch der Handgriff durch einen Handgriff mit Funksteuerung ersetzt werden.

## Patentansprüche

1. Golfwagen mit einem Gestell für eine Golftasche, das mit mindestens zwei Laufrädern (10, 10') versehen ist, sowie mit einem elektromotorischen Antrieb (13, 13') für die Laufräder (10, 10'), **dadurch gekennzeichnet, dass** bei jedem angetriebenen Laufrad (10, 10') der das Rad antreibende Elektromotor (13, 13') sowie mindestens eine Batterie (16, 16') im Laufrad (10, 10') angeordnet sind.

2. Golfwagen nach Anspruch 1, **dadurch gekennzeichnet, dass** der Elektromotor (13, 13') und die mindestens eine Batterie (16, 16') ohne Überstand im Laufrad (10, 10') untergebracht sind.

3. Golfwagen nach Anspruch 1 oder 2, **dadurch gekennzeichnet, dass** der Elektromotor (13) über ein Ritzel auf einen Innenzahnkranz (14) des Laufrads (10) einwirkt.

4. Golfwagen nach einem der Ansprüche 1 bis 3, **dadurch gekennzeichnet, dass** der Elektromotor (13, 13') in eine Leerlaufstellung bringbar ist.

5. Golfwagen nach einem der Ansprüche 1 bis 4, **dadurch gekennzeichnet, dass** der Elektromotor (13') ein getriebeloser Motor ist.

6. Golfwagen nach einem der Ansprüche 1 bis 5, **dadurch gekennzeichnet, dass** der Elektromotor (13, 13') bei Talfahrt den Wagen bremst und Energie in die Batterien (16, 16') zurückspeist.

7. Golfwagen nach einem der Ansprüche 1 bis 6, **dadurch gekennzeichnet, dass** die Laufräder (10, 10') mittels Steckachsen (11, 11') abnehmbar an dem Gestell befestigt sind.

8. Golfwagen nach einem der Ansprüche 1 bis 7, **dadurch gekennzeichnet, dass** die Laufräder (10, 10') ohne Werkzeug vom Gestell abnehmbar und wieder montierbar sind.

9. Golfwagen nach einem der Ansprüche 1 bis 8, **dadurch gekennzeichnet, dass** die Laufräder (10, 10') gegeneinander austauschbar ausgebildet sind.

10. Golfwagen nach einem der Ansprüche 1 bis 9, **dadurch gekennzeichnet, dass** er mindestens zwei angetriebene Laufräder (10, 10') aufweist.

11. Golfwagen nach einem der Ansprüche 1 bis 10, **dadurch gekennzeichnet, dass** der elektromotorische Antrieb (13, 13') über einen Sensorhandgriff des Wagens angesteuert ist.

12. Golfwagen nach Anspruch 11, **dadurch gekennzeichnet, dass** der Sensorhandgriff den elektromotorischen Antrieb (13, 13') per Funk ansteuert.

13. Golfwagen nach Anspruch 11 oder 12, **dadurch gekennzeichnet, dass** die Ansteuerelektronik (23) des elektromotorischen Antriebs (13') im Laufrad (10') integriert ist.

14. Golfwagen nach einem der Ansprüche 11 bis 13, **dadurch gekennzeichnet, dass** der Sensorgriff ein Schieben oder Ziehen des Wagens unterscheiden kann.

15. Golfwagen nach einem der Ansprüche 11 bis 14, **dadurch gekennzeichnet, dass** sich die Geschwindigkeit des Wagens über den Sensorhandgriff automatisch an die Gehgeschwindigkeit des Benutzers anpasst.

16. Golfwagen nach einem der Ansprüche 1 bis 15, **dadurch gekennzeichnet, dass** er ein zusammemklappbares Gestell aufweist.
